# FASCICULE DE BREVET EUROPEEN

(11) **EP 0 810 426 B1**
(45) Date de publication et mention de la délivrance du brevet: **26.04.2000**
(21) Numéro de dépôt: 97400611.6
(22) Date de dépôt: 19.03.1997
(51) Int. Cl.: G01L 1/24, B66B 1/34

(54) **Capteur de force optronique, notamment pour la mesure de la charge des cabines d'ascenseur**
Optischer Kraftsensor, insbesondere zur Messung der Last in Aufzugskabinen
Optical force sensor, especially for measuring the load in elevator cabins

(30) Priorité: 30.05.1996 FR 9606650
(43) Date de publication de la demande: 03.12.1997
(73) Titulaire: OTIS ELEVATOR COMPANY, Farmington, CT 06032 (US)
(72) Inventeur: Sirigu, Gérard, 45500 Gien (FR); Raillard, Vincent, 45500 Gien (FR); Rebillard, Pascal, 45500 Gien (FR)
(74) Mandataire: Jolly, Jean-Pierre

(56) Documents cités:
- GB-A- 2 204 679
- US-A- 4 071 116
- US-A- 4 763 740

## Description

L'invention concerne un capteur de force optronique, notamment pour la mesure de la charge des cabines d'ascenseur.

On sait que les ascenseurs de standard européen actuels sont équipés d'un système de pèse-charge à micro-interrupteurs. La charge en cabine écrase de façon variable les tampons d'isolation cabine et une poutre de plancher de la cabine vient écraser les interrupteurs disposés de façon déterminée en fonction de seuils continus croissants de charge. La disposition de contact de ces interrupteurs renseigne donc de la charge en cabine. Néanmoins, un tel système comporte divers inconvénients qui consistent essentiellement dans la difficulté du réglage, effectué sur site, de l'imprécision de la mesure correspondant à des seuils de charge, et de la sensibilité importante des plots d'isolation de cabine à la température et au vieillissement.

L'invention vise à remédier à ces inconvénients et a pour objet un capteur de force destiné notamment à la mesure de la charge des cabines d'ascenseur, qui soit de fabrication simple et peu coûteuse, d'adaptation facile à tous les types de cabines isolées ou non, réglable en usine et facile à monter, robuste et de faible encombrement et qui apporte une bonne précision sur la mesure de la charge en cabine.

On connaît encore par FR-A-2 726 646 au nom de la Demanderesse, un dispositif de capteur pour la mesure de la charge des cabines d'ascenseur, à forme de boîtier cylindrique déformable élastiquement, logeant un dispositif à bagues dentées de déformation d'une fibre optique et dont la transmission de lumière variable fonction de la déformation du boîtier renseigne de la mesure de la charge de la cabine d'ascenseur. Ce dispositif de capteur est monté entre le plancher de cabine et son arcade. Néanmoins, ce dispositif manque de fiabilité, le vieillissement à la fatigue de la fibre provoquant la cassure de la gaine de celle-ci et compromettant son utilisation ultérieure.

L'invention vise à améliorer en particulier la fiabilité d'un tel capteur et à rendre sa fabrication moins onéreuse.

Il est en effet proposé selon l'invention un capteur de force, notamment pour la mesure de la charge des cabines d'ascenseur, du type comprenant un boîtier cylindrique rigide en acier, de faible hauteur, solidaire par ses faces supérieure et inférieure, respectivement, du plancher de cabine et de son arcade, ledit boîtier ayant une caractéristique de déformation élastique de sorte que la hauteur de sa face supérieure relativement à la face inférieure varie en fonction de la charge appliquée sur celle-ci, caractérisé en ce qu'il comporte au moins une partie de lamelle fixée sous la face supérieure du boîtier et transversalement à celle-ci, cette partie de lamelle étant pourvue d'une lumière de passage d'un flux lumineux, disposée entre une source lumineuse et un détecteur lumineux en position fixe relativement à la face inférieure du boîtier, le détecteur lumineux mesurant le flux du faisceau lumineux transmis par ladite lumière et qui varie en fonction du déplacement de la partie de lamelle relativement à ladite face inférieure du boîtier, et une unité électronique de traitement du signal émis par ledit détecteur lumineux en vue de déterminer l'effort appliqué sur la face supérieure du boîtier.

Naturellement, la détermination de l'effort appliqué sur le capteur est effectuée par comparaison de la variation du flux du faisceau transmis, en référence à des courbes abaques de mesure.

Ladite lamelle est avantageusement en forme de L, fixée par sa branche longue sur la face supérieure du boîtier, la branche la plus courte pourvue de la lumière étant disposée en position sensiblement centrale sous la face supérieure, transversalement à cette dernière.

La lamelle peut être réglée à distance variable de la branche transversale relativement à la face supérieure, par exemple, au moyen d'une vis engagée sur la plaque de face supérieure et s'appliquant par son extrémité sur la branche longue de la lamelle. Ce réglage permet d'ajuster le passage du faisceau lumineux dans la lumière de la lamelle.

Ladite lumière est une fente longitudinale horizontale (parallèle au plan de la face supérieure).

Naturellement, les composants émetteurs et détecteurs lumineux et électroniques de l'unité de traitement peuvent être logés à l'intérieur du boîtier, par exemple montés sur la plaque de face inférieure du boîtier ou sur une plaque de carte électronique proche de ladite face inférieure.

La source lumineuse est avantageusement une diode électroluminescente (LED) et le détecteur lumineux une photodiode adaptée.

Le détecteur lumineux peut encore comprendre au moins deux photodiodes disposées adjacentes et recevant une partie du flux lumineux transmise par la lumière de la lamelle. La différence d'éclairement des photodiodes, variable en fonction de la position de la lamelle est analysée par l'unité de traitement pour déterminer, par comparaison à des courbes abaques de référence, la charge appliquée sur le capteur.

Le détecteur lumineux peut encore consister en un composant photosensible de type à lecture directe du positionnement du flux lumineux reçu.

Un exemple de réalisation de l'invention est à présent décrit en référence aux dessins annexés sur lesquels :
- la figure 1 est un schéma du capteur selon l'invention avec ses composants optiques,
- la figure 2 est une vue en perspective éclatée d'un capteur selon l'invention, et
- la figure 3 est un exemple de circuit électronique schématique de l'unité de traitement du capteur.

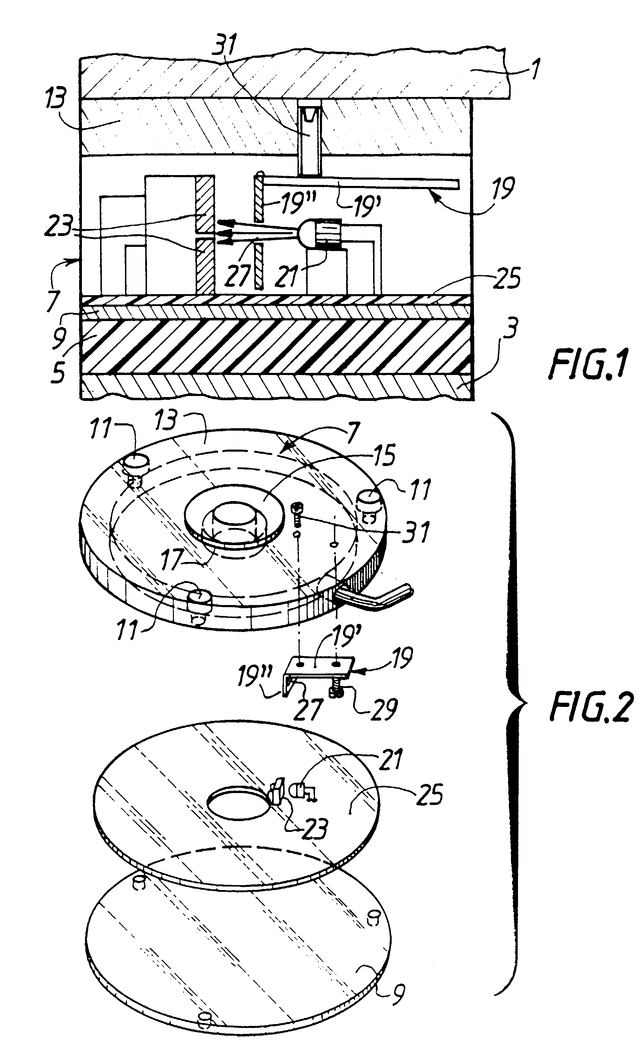

Le capteur de force selon l'invention représenté sur la figure 2 est adapté à l'application de la mesure de charge des cabines d'ascenseur. Il est interposé entre le plancher 1 de la cabine et son arcade 3, éventuellement monté sur un tampon d'isolation 5 en matière à base de caoutchouc. Il comporte un boîtier cylindrique 7 en acier de faible hauteur (0,5 à 1,5 cm) qui est fermé par une plaque circulaire amovible inférieure 9 solidaire du tampon 5 (par collage ou vulcanisation). La partie de corps du boîtier 7 est montée serrée solidaire de la plaque inférieure 9 au moyen de trois vis 11 réparties à 120° l'une de l'autre sur sa périphérie et vissées à cette dernière. La cabine repose sur sa face supérieure 13 en position centrale sur une partie de surépaisseur circulaire 15. Cette face s'enfonce de façon variable proportionnellement à l'amplitude de la charge de cabine vers la plaque inférieure 9. Elle joue le rôle d'élément déformable élastique précité dont le dimensionnement, le matériau employé et l'épaisseur influent sur la rigidité élastique en rappel vers le haut de la face supérieure du boîtier. Ladite partie de surépaisseur 15 de la face supérieure du boîtier est pourvue d'une bague interne sous-jacente 17, laquelle reçoit par son alésage fileté coaxial au boîtier une vis (non représentée) de fixation de la cabine. L'extrémité inférieure de la bague 17 est distante de la plaque inférieure 9 d'un certain jeu de fonctionnement qui correspond au déplacement maximal permis vers le bas de la face supérieure 13 du boîtier. Au delà, elle sert de butée protégeant le capteur dans sa capacité de charge nominale.

Les composants optiques du capteur sont illustrés plus particulièrement à la figure 1. Ceux-ci consistent en une lamelle 19 fixée sous la plaque supérieure 13 de corps du boîtier, en une diode électroluminescente 21 (LED) et en un ensemble de deux photodiodes 23. La diode électroluminescente 21 et les photodiodes 23 sont montées de façon fixe sur une plaque de carte électronique 25 à faible distance de la plaque inférieure 9 du boîtier. La lamelle 19 est à forme de L fixée par sa branche longue 19' à la plaque supérieure 13 de boîtier. Sa branche courte 19'' est implantée en position verticale, sensiblement centrale relativement à la plaque supérieure circulaire 13. Cette branche courte 19'' est pourvue d'une lumière ou fente longitudinale horizontale 27 en sa partie médiane, disposée entre la diode électroluminescente 21 et l'ensemble des deux photodiodes 23, à faible distance de ceux-ci. Cette lumière 27 se trouve sensiblement dans le plan médian horizontal de la diode électroluminescente 21 et de l'ensemble des deux photodiodes 23, lesquels se trouvent d'un même côté de la bague 17, à proximité de celle-ci. La lamelle 19 est fixée à la plaque supérieure 13 de corps du boîtier par une vis 29 serrée sur la partie d'extrémité de la branche longue 19'. Une vis de réglage 31 à prise dans la plaque supérieure 13 est en contact par son extrémité avec la lamelle, en un point proche de la branche verticale 19''. Cette vis 31 est tournée plus ou moins selon le besoin pour ajuster le positionnement vertical de la lumière relativement à la diode électroluminescente et à l'ensemble des photodiodes. Lors du fonctionnement du capteur, la lamelle 19 se déplace verticalement en fonction du mouvement de la plaque supérieure 13 du boîtier et par conséquent la lumière 27 de la branche courte se déplace verticalement de façon équivalente à la partie centrale de la plaque supérieure 13 du boîtier, alors que les autres éléments optiques, diode électroluminescente 21 et photodiodes 23 demeurent en position fixe sur leur support. Le flux lumineux émis par la diode électroluminescente 21 et transmis aux photodiodes 23 par la lumière 27 va donc varier en fonction de la position relative de la lumière et du plan médian horizontal fixe de la diode électroluminescente et des deux photodiodes.

L'unité électronique de traitement du signal de tension électrique à la sortie des photodiodes, dont les composants sont montés également sur la carte électronique 25 permet de tirer la différence d'éclairement des photodiodes, laquelle varie en fonction de la position de la lamelle et de récupérer par comparaison à une courbe de valeurs de référence la déformation de la plaque supérieure du boîtier, et donc la force appliquée au capteur.

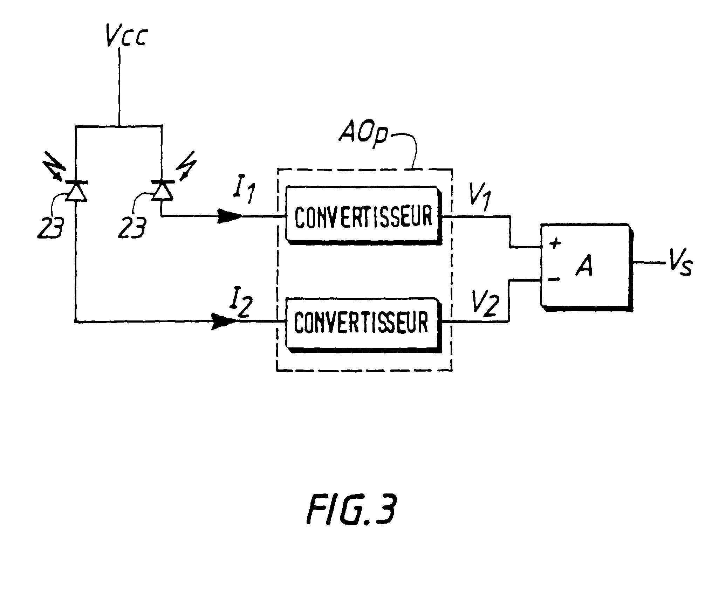

L'unité électronique de traitement est décrite ci-après en référence à la figure 3. Elle comporte deux branches I₁ et I₂ correspondant à chacune des sorties de courant I₁ et I₂ des photodiodes 23 et comportant chacune un convertisseur courant-tension. Ces convertisseurs peuvent consister en un module à amplificateur opérationnel Aop, dont les deux sorties de tension V₁, V₂ sont reliées à un module soustracteur A à amplificateur de gain adapté à la sensibilité du système. La tension de sortie V_{S} est proportionnelle à la différence des tensions V₁ et V₂, laquelle est fonction de l'éclairement des photodiodes 23, donc du déplacement de la lamelle et de sa lumière et donc de la force appliquée sur le capteur.

Naturellement, dans l'application spécifique à l'ascenseur, on pourra utiliser deux, quatre ou plus de ces capteurs judicieusement disposés pour recevoir une fraction connue de la charge de cabine. La charge de cabine est alors obtenue en sommant les valeurs données par chacun des capteurs de cabine.

On notera que le capteur de force selon l'invention, en raison de sa fiabilité importante et de son faible coût relativement aux capteurs à jauges de contrainte peut être appliqué avantageusement aux mesures de pression, manomètres par exemple à lamelle solidaire d'une membrane élastique, déformation de pièces en général, mesure de positionnement, et à la possibilité d'un contrôle ou commande associées directes, s'il y a lieu, en raison de l'électronique intégrée.

## Revendications

1. capteur de force, notamment pour la mesure de la charge des cabines d'ascenseur, du type comprenant un boîtier cylindrique rigide en acier (7), de faible hauteur, solidaire par ses faces supérieure (13) et inférieure (9), respectivement, du plancher (1) de cabine et de son arcade (3), ledit boîtier (7) ayant une caractéristique de déformation élastique de sorte que la hauteur de sa face supérieure (13) relativement à la face inférieure (9) varie en fonction de la charge appliquée sur celle-ci, caractérisé en ce qu'il comporte au moins une partie de lamelle (19) fixée sous la face supérieure (13) du boîtier et transversalement à celle-ci, cette partie de lamelle (19) étant pourvue d'une lumière (27) de passage d'un flux lumineux, disposée entre une source lumineuse (21) et un détecteur lumineux (23) en position fixe relativement à la face inférieure (9), de telle manière que le faisceau lumineux transmis par ladite lumière varie en fonction du déplacement de la partie de lamelle (19) relativement à ladite face inférieure (9) du boîtier, le détecteur lumineux (23) positionné pour mesurer le flux du faisceau lumineux transmis par ladite lumière (27), et une unité électronique de traitement du signal émis par ledit détecteur lumineux en vue de déterminer l'effort appliqué sur la face supérieure (13) du boîtier.

2. Capteur de force selon la revendication 1, caractérisé en ce que ladite lamelle (19) est en forme de L, fixée par sa branche longue (19') à la face supérieure (13) du boîtier, la branche la plus courte (19'') pourvue de la lumière (27) étant disposée en position sensiblement centrale sous la face supérieure (13), transversalement à cette dernière.

3. Capteur de force selon l'une des revendications 1-2, caractérisé en ce que la branche courte transversale (19'') de la lamelle est réglée à distance variable de la face supérieure (13), par exemple au moyen d'une vis (31) engagée sur la plaque de face supérieure (13) et s'appliquant par son extrémité sur la branche longue (19') de la lamelle.

4. Capteur de force selon l'une des revendications 1-3, caractérisé en ce que les composants émetteur lumineux (21), détecteur lumineux (23) et électroniques de l'unité de traitement sont logés à l'intérieur du boîtier (7), par exemple montés sur la plaque de face inférieure (9) du boîtier ou sur une plaque de carte électronique (25) proche de ladite face inférieure (9).

5. Capteur de force selon l'une des revendications précédentes, caractérisé en ce que la source lumineuse (21) est une diode électroluminescente (LED) et le détecteur lumineux (23) une photodiode adaptée.

6. Capteur de force selon l'une des revendications précédentes, caractérisé en ce que le détecteur lumineux (23) comprend au moins deux photodiodes disposées adjacentes et recevant une partie de flux lumineux transmise par la lumière (27) de la lamelle (19), la différence d'éclairement des photodiodes (23), variable en fonction de la position de la lamelle étant analysée par l'unité de traitement pour déterminer la charge appliquée sur le capteur.

7. Capteur de force selon l'une des revendications 1 à 4, caractérisé en ce que le détecteur lumineux est un composant photosensible de type à lecture directe du positionnement du flux lumineux reçu.

8. Capteur de force selon l'une des revendications précédentes, caractérisé en ce que ladite lumière (27) est une fente longitudinale horizontale, parallèle au plan de la face supérieure (13) et disposée sensiblement dans un plan horizontal médian de la source lumineuse et du détecteur lumineux.

9. Capteur de force selon l'une des revendications précédentes, caractérisé en ce qu'il est appliqué aux mesures de pression, manomètres par exemple à lamelle solidaire d'une membrane élastique, déformation de pièces en général, mesure de positionnement, et à la possibilité d'un contrôle ou commande associées directes, s'il y a lieu, en raison de l'électronique intégrée.

## Patentansprüche

1. Kraftsensor, insbesondere für die Messung der Beladung von Aufzugkabinen, umfassend ein zylindrisches starres Stahlgehäuse (7) geringer Höhe, das mit seiner Oberseite (13) und seiner Unterseite (9) einstückig mit dem Boden (1) der Kabine bzw. deren Gestell (3) ausgebildet ist, wobei das Gehäuse (7) eine solche elastische Verformbarkeit aufweist, daß die Höhe seiner Oberseite (13) relativ zu seiner Unterseite (9) als Funktion der auf das Gehäuse aufgebrachten Last variiert, dadurch gekennzeichnet, daß er mindestens ein plättchenförmiges Teil (19) aufweist, das an der Oberseite (13) des Gehäuses und quer dazu verlaufend fixiert ist, wobei dieses plättchenförmige Teil (19) mit einer Lichtdurchgangsöffnung (97) ausgestattet ist, die sich zwischen einer Lichtquelle (21) und einem Lichtdetektor (23) befindet, die eine feste relative Lage bezüglich der Unterseite (9) aufweist, derart, daß das von der Öffnung hindurchgelassene Lichtstrahlbündel sich in Abhängigkeit der Verlagerung des plättchenförmigen Teils (19) relativ zu der Unterseite (9) des Gehäuses ändert, wobei der Lichtdetektor (23) derart positioniert ist, daß er den Verlauf des Lichtstrahlbündels mißt, welches durch die Öffnung (27) gelangt, und ein elektronische Verarbeitungseinheit aufweist für das von dem Lichtdetektor abgegebene Signal, um die auf die Oberseite (13) des Gehäuses aufgebrachte Belastung zu bestimmen.

2. Kraftsensor nach Anspruch 1, dadurch gekennzeichnet, daß das Plättchen (19) L-förmig ist, und mit seinem langen Schenkel (19') an der Oberseite (19) des Gehäuses fixiert ist, während der mit der Öffnung (27) ausgestattete kürzere Schenkel (13") an einer Stelle etwa mittig unterhalb der Oberseite (13) und quer zu dieser verlaufend angeordnet ist.

3. Kraftsensor nach einem der Ansprüche 1 und 2, dadurch gekennzeichnet, daß der kurze Querschenkel (19") des Plättchens einen verstellbaren Abstand von der Oberseite (13) aufweist, beispielsweise mittels einer Schraube (31), die in den Boden der Oberseite (13) eingreift und sich mit ihrem Ende an dem langen Schenkel (19') des Plättchens abstützt.

4. Kraftsensor nach einem der Ansprüche 1 bis 3, dadurch gekennzeichnet, daß die Bauteile der Lichtquelle (21), des Lichtdetektors (23) und der Elektronik der Verarbeitungseinheit im Inneren des Gehäuses (7) untergebracht sind, beispielsweise am Boden der Unterseite (9) des Gehäuses oder an einer Schaltungsplatine der Elektronik (25) in der Nähe der Unterseite (9) gelagert sind.

5. Kraftsensor nach einem der vorhergehenden Ansprüche, dadurch gekennzeichnet, daß die Lichtquelle (21) eine Leuchtdiode (LED) ist, und daß der Lichtdetektor (23) eine dazu passende Fotodiode ist.

6. Kraftsensor nach einem der vorhergehenden Ansprüche, dadurch gekennzeichnet, daß der Lichtdetektor (23) mindestens zwei Fotodioden aufweist, die benachbart zueinander angeordnet sind und einen Teil des durch die Öffnung (27) des Plättchens (19) hindurch gelangten Lichtstroms empfangen, wobei die Differenz in der Beleuchtung der Fotodioden (23), veränderlich als Funktion der Stellung des Plättchens, mit der Verarbeitungseinheit analysiert wird, um die auf den Sensor aufgebrachte Last zu bestimmen.

7. Kraftsensor nach einem der Ansprüche 1 bis 4, dadurch gekennzeichnet, daß der Lichtdetektor ein fotoempfindliches Bauelement von einem Typ ist, der eine direkte Messung der Stelle des empfangenen Lichtstroms vornimmt.

8. Kraftsensor nach einem der vorhergehenden Ansprüche, dadurch gekennzeichnet, daß die Öffnung (27) ein horizontaler Längsschlitz parallel zu der Ebene der Oberseite (13) und etwa in der Horizontalebene in der Mitte zwischen Lichtquelle und Lichtdetektor liegend ist.

9. Kraftsensor nach einem der vorhergehenden Ansprüche, dadurch gekennzeichnet, daß er eingesetzt wird zur Druckmessung, für Manometer, beispielsweise Manometer mit Lamelle, die einstückig mit einer elastischen Membran ist, bei der Verformung von Teilen allgemein, bei der Positionsmessung und bei der Möglichkeit einer Kontrolle oder Steuerung, die wegen der integrierten Elektronik nötigenfalls direkt zugeordnet sind.

## Claims

1. Force sensor, notably for measuring the load in lift cars, of the type comprising a rigid steel cylindrical casing (7) of limited height which is attached by its top and bottom surfaces (13, 9), respectively, to the floor (1) of the car and its support (3), said casing (7) having an elastic deformation characteristic such that the height of its top surface (13) relative to the bottom surface (9) varies as a function of the load applied thereto, characterised in that it comprises at least one leaf portion (19) fixed below the top surface (13) of the housing and transversely with respect thereto, this leaf portion (19) being provided with an opening (27) for the passage of a luminous flux, disposed between a light source (21) and a light detector (23) in a fixed position relative to the bottom surface (9), so that the light beam transmitted through said opening varies as a function of the displacement of the leaf portion (19) relative to said bottom surface (9) of the casing, the light detector (23) being positioned so as to measure the flux of the light beam transmitted through said opening (27), and an electronic processor unit for the signal emitted by said light detector with a view to determining the force applied to the top surface (13) of the casing.

2. Force sensor according to claim 1, characterised in that the leaf (19) is L-shaped, with its long arm (19') attached to the top surface (13) of the casing, the shorter arm (19") containing the opening (27) being disposed in a substantially central position below the top surface (13), transversely with respect to the latter.

3. Force sensor according to one of claims 1 to 2, characterised in that the short transverse arm (19") of the leaf is adjusted to a variable spacing from the top surface (13), for example by means of a screw (31) engaging on the top plate (13) and bearing with its end on the long arm (19') of the leaf.

4. Force sensor according to one of claims 1 to 3, characterised in that the light emitter (21), the light detector (23) and the electronic components of the processor unit are housed inside the casing (7), for example mounted on the bottom plate (9) of the casing or on a circuit board (25) close to said bottom surface (9) .

5. Force sensor according to one of the preceding claims, characterised in that the light source (21) is a light-emitting diode (LED) and the light detector (23) is a modified photodiode.

6. Force sensor according to one of the preceding claims, characterised in that the light detector (23) comprises at least two photodiodes arranged adjacent each other and receiving some of the luminous flux transmitted through the opening in the leaf (19), the difference in illumination of the photodiodes (23), which is variable as a function of the position of the leaf, being analysed by the processor unit in order to determine the load applied to the sensor.

7. Force sensor according to one of claims 1 to 4, characterised in that the light detector is a light-sensitive component of the type which directly scans the position of the luminous flux received.

8. Force sensor according to one of the preceding claims, characterised in that the opening (27) is a horizontal longitudinal slot, parallel to the plane of the top surface (13) and disposed substantially in a horizontal median plane of the light source and the light detector.

9. Force sensor according to one of the preceding claims, characterised in that it is applied to measurements of pressure, manometers for example with a leaf attached to a flexible membrane, deformation of components in general, measurement of position, and the possibility of associated direct control or command, if appropriate, by means of integrated electronics.
